# EUROPEAN PATENT APPLICATION

(11) **EP 3 276 545 A1**
(43) Date of publication of application: **31.01.2018**
(21) Application number: 17176348.5
(22) Date of filing: 16.06.2017
(51) Int. Cl.: G06Q 10/04, G06Q 50/14

(54) **SETTING CONTROL METHOD AND SETTING CONTROL DEVICE**

(30) Priority: 27.07.2016 JP 2016147866
(71) Applicant: Fujitsu Limited, Kawasaki-shi, Kanagawa 211-8588 (JP)
(72) Inventor: Miyamoto, Akihiro, Kanagawa, 211-8588 (JP); Ito, Fumito, Kanagawa, 211-8588 (JP)
(74) Representative: Hoffmann Eitle

(57) **Abstract**

A setting control program for causing a computer to execute a process, the process includes setting, when receiving a change instruction to change an attribute of a first itinerary including at least one piece of spot information to a visited state, the attribute of the first itinerary to a visited state and executing an update process of updating setting so that an attribute of each piece of spot information included in the first itinerary becomes a visited state, and refraining from setting an attribute of a second itinerary to a visited state even when attributes of all pieces of spot information included in the second itinerary have become a visited state in response to the update process for the second itinerary whose attribute is a not-visited state.

## Description

### FIELD

The embodiments discussed herein are related to a setting control method and a setting control device.

### BACKGROUND

In recent years, technology that generates an itinerary and provides it to the user is known. For example, a service is provided in which a spot that is popular among users is selected from among a plurality of spots in a prescribed area related to entertainment, sports, culture, etc. so as to generate an itinerary of touring around the selected spots. Also, a plurality of itineraries generated for the user are provided. Also, technology that can be used for assisting in generating or managing an itinerary is also known.
Patent Document 1: Japanese Laid-open Patent Publication No. 2000-193478
Patent Document 2: Japanese Laid-open Patent Publication No. 2007-271366

### SUMMARY

Accordingly, it is an object in one aspect of the invention to provide technology that can suppress the complexity in setting information that represents a visited state for an itinerary or a spot.

According to an aspect of the embodiments, a setting control program causes a computer to execute a process, the process including setting, when receiving a change instruction to change an attribute of a first itinerary including at least one piece of spot information to a visited state, the attribute of the first itinerary to a visited state and executing an update process of updating setting so that an attribute of each piece of spot information included in the first itinerary becomes a visited state, and refraining from setting an attribute of a second itinerary to a visited state even when attributes of all pieces of spot information included in the second itinerary have become a visited state in response to the update process for the second itinerary whose attribute is a not-visited state.

### BRIEF DESCRIPTION OF DRAWINGS

FIG. 1 illustrates an example of a system according to an embodiment;
FIG. 2 exemplifies a block configuration of a server according to the embodiment;
FIG. 3 exemplifies an itinerary list window that displays a list of itineraries according to the embodiment;
FIG. 4 exemplifies a spot list window that lists pieces of spot information included in an itinerary;
FIG. 5 exemplifies a relationship between an itinerary and a spot;
FIG. 6 exemplifies an itinerary master;
FIG. 7 exemplifies a spot master;
FIG. 8 exemplifies association information;
FIG. 9 exemplifies visited-state information according to the embodiment;
FIG. 10 exemplifies a relationship between a user, an itinerary, spot information, and an attribute according to the embodiment;
FIG. 11 exemplifies an operation flow of a setting control process of a visited state of an itinerary according to the embodiment;
FIG. 12 exemplifies an operation flow of a setting control process of a visited state of spot information according to the embodiment;
FIG. 13 exemplifies an operation flow of a display process according to the embodiment; and
FIG. 14 exemplifies a hardware configuration of a computer for implementing a server according to the embodiment.

### DESCRIPTION OF EMBODIMENTS

As described above, there are pieces of software that provide services of assisting in generating or managing itineraries. Note that software such as this may also be referred to as assistance software. By using assistance software, the user can select spots from among for example a plurality of spots in a prescribed area related to entertainment, sports, culture, etc. so as to generate an itinerary of touring around the selected spots. Also, the user can be provided with the itinerary generated by using the assistance software.

Also, assistance software may be provided with an editing function so that the user can customize an itinerary by using assistance software such as by adding or deleting spots to or from an itinerary, changing a route, etc. Further, by providing assistance software with a function of allowing a plurality of users to share an itinerary, a plurality of people can share one itinerary so as to edit it.

Using this type of assistance software makes it possible for the user to for example generate an itinerary that satisfies his or her preference. This makes it possible for the users to generate unique itineraries that satisfy the user's preference such as for example an itinerary of touring around haunted spots for users who have a hobby of touring around such spots, an itinerary of touring around cut-out face signs for taking pictures with faces fit into them, etc. Then, other users can find an itinerary that satisfies his or her preference from among for example many unique itineraries so as to use it or customize it.

Also, assistance software may further be provided with artificial intelligence so that it analyzes relationships between people or people having similar hobbies in order to recommend an itinerary that satisfies the users' preference.

In preparing an itinerary, an itinerary that a user has never experienced is more likely to become a candidate for the destination of a next tour than is a spot or an itinerary that they have visited or experienced before. Thus, when for example the user experienced a tour based on an itinerary for which a plurality of spots are registered, the assistance software sometimes sets, for the tour based on that itinerary, an attribute indicating that the user has visited the tour based on that itinerary. However, in such a case, because the user has visited each of the plurality of spots included in the itinerary, a process of setting an attribute of a visited state may occur for each of the spots, resulting in complexity. In view of this, it is desired that technology that can suppress the complexity in setting information that represents a visited state for an itinerary or a spot be provided.

In the embodiments, which will be described later, when the user changes the attribute of an itinerary to a visited state in assistance software, the attributes of all spots included in that itinerary are respectively changed to a visited state in the assistance software. This makes it easy for the user to set spots included in an itinerary to a visited state when the user sets that itinerary to a visited state.

Also, for example a spot is sometimes registered for a plurality of itineraries in assistance software. Also, when for example the user set the attribute of an itinerary or a spot to a visited state, the attributes of all spots included in a different itinerary that is still set to a not-visited state may sometimes become a visited state. However, even when an itinerary includes the same spots such as an itinerary of touring around haunted spots, an itinerary of touring around cut-out face signs for taking pictures with faces fit into them, etc., it may be based on different intentions. This makes it desirable to treat these two itineraries as separate itineraries. It is assumed for example that the user set the attributes of an itinerary or spots to a visited state, and, in response to the setting, all spots included in a different itinerary whose attribute is still set to a not-visited state changed to a visited state. Even in this case, the attribute of that different itinerary is not changed to a visited state in the following embodiments. Thus, the embodiments make it possible to manage information on whether or not an itinerary has been visited with a higher accuracy.

Hereinafter, detailed explanations will be given for some of the embodiments by referring to the drawings. Note that elements corresponding to each other over a plurality of figures will be denoted by the same symbol.

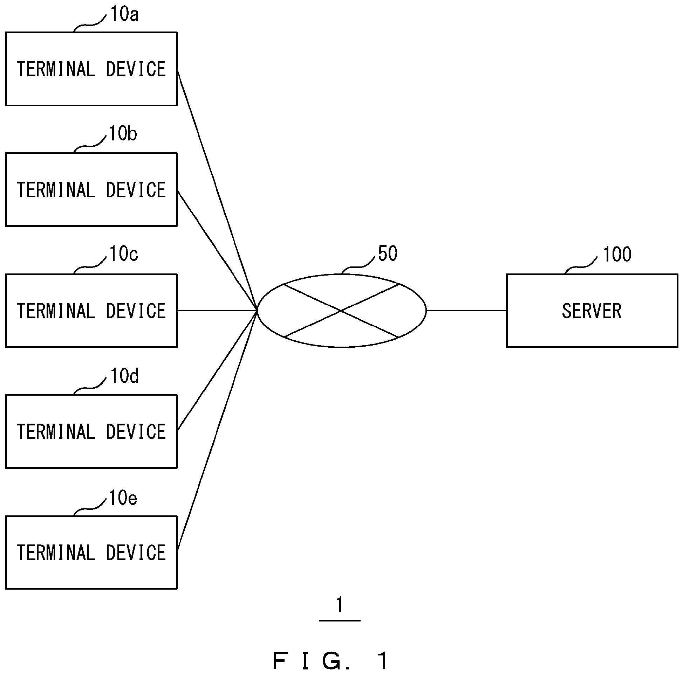

FIG. 1 illustrates an example of a system 1 according to an embodiment. As illustrated in FIG. 1, the system 1 includes terminal devices 10a, 10b, 10c, 10d, 10e and a server 100.

While FIG. 1 illustrates the terminal devices 10a through 10e, the system 1 may include a terminal device in addition to the terminal devices 10a through 10e. In the explanations below, the terminal devices 10a through 10e will collectively be referred to as terminal devices 10 when appropriate. The terminal devices 10 and the server 100 are connected to each other via a network 50. The terminal device 10 is a terminal device that corresponds to a smartphone, a tablet terminal, a notebook PC (Personal Computer), etc., used by a user.

The server 100 is an example of a setting control device that for example provides the terminal devices 10 with an itinerary assistance service, which assists in generating or managing an itinerary, and controls the setting of information on whether or not an itinerary or a spot is a visited state. Note that the itinerary assistance service, which assists in generating or managing an itinerary, may be provided by for example the execution of assistance software by the server 100. When for example the server 100 has registered information of an itinerary and receives an access related to the information of the itinerary from the terminal device 10, the server may report the information of the itinerary to display the information on the display window of the display device included in the terminal device 10. Note that an itinerary may be registered in the server 100 for example by the user through the terminal device 10 as described above, or may be registered in the server 100 by the administrator of the server 100.

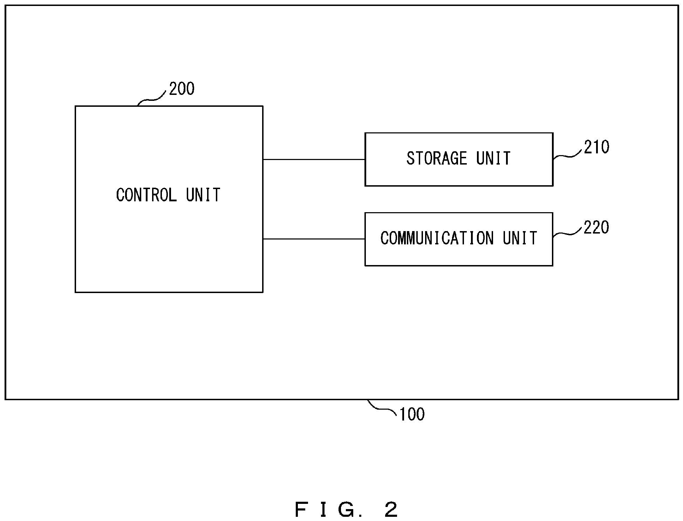

FIG. 2 exemplifies a block configuration of the server 100 according to the embodiment. The server 100 includes for example a control unit 200, a storage unit 210 and a communication unit 220. The storage unit 210 stores information such as for example assistance software, a setting control program, an itinerary master 600, a spot master 700, association information 800, visited-state information 900, which will be described later, etc. Note that a setting control program is a program for for example controlling setting of information on whether or not an itinerary or a spot is a visited state, and may be included in assistance software. The communication unit 220 conducts data communications with the terminal devices 10 via the network 50 in accordance with instructions from the control unit 200. The control unit 200 exchanges data with the terminal devices 10 via the communication unit 220 in a process according to the embodiment, which will be described later. These constituents and information stored in the storage unit 210 will be described later in detail.

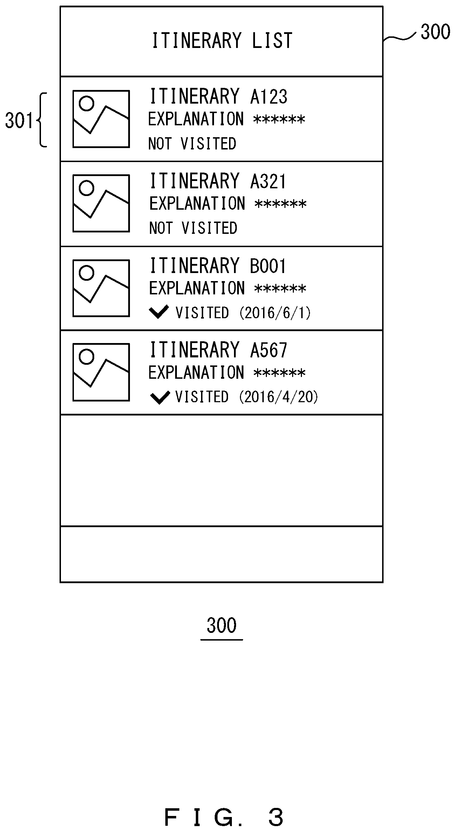

FIG. 3 exemplifies an itinerary list window 300 that is displayed in the terminal device 10. As illustrated in FIG. 3, a plurality of itineraries 301 are registered in the itinerary list window 300. Note that for example a plurality of spots and the order of touring around those spots are associated with the itineraries 301 as will be described later. The itinerary 301 may be for example an itinerary generated by the user, or may be the itinerary 301 generated by the management side that provides the itinerary assistance service through the server 100. In the example illustrated in FIG. 3, information corresponding to a visited state attribute is given for the itinerary 301 that the user has already experienced, and information corresponding to a not-visited state is given for an itinerary that the user has not experienced. Also, itineraries 301 that the user has not experienced are given a higher priority so that they are displayed at higher positions than the itineraries 301 that they have experienced before.

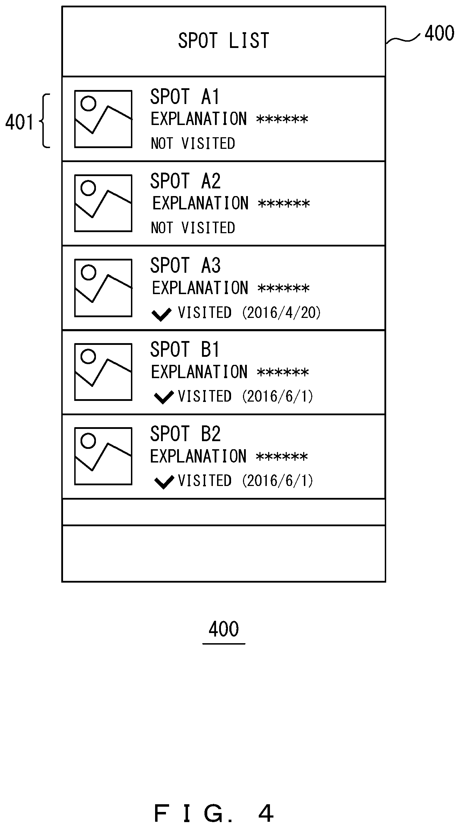

FIG. 4 exemplifies a spot list window 400 that lists pieces of spot information 401 included in an itinerary. Note that spot information 401 may be information on a place (spot) related to for example entertainment, sports, culture, etc., and may include information on tourist attractions, shops, leisure facilities, etc. The spot list window 400 may display the spot information 401 in the order according to a corresponding itinerary or may display the spot information 401 that the user has not visited before with a higher priority than the spot information 401 that they have visited before. In the example illustrated in FIG. 4, information corresponding to a visited state attribute is displayed for the spot information 401 of a spot that the user has visited before, and information corresponding to a not-visited attribute is displayed for the spot information 401 of a spot that they have not visited before.

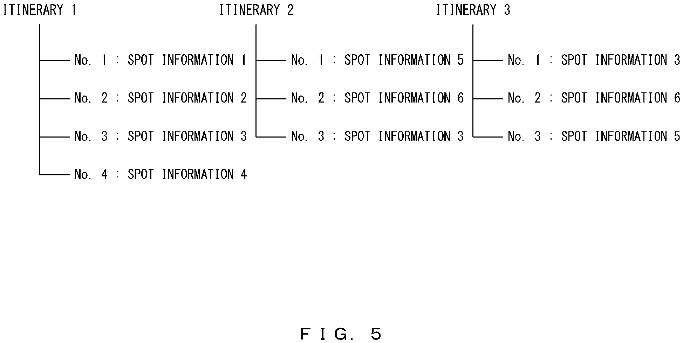

FIG. 5 exemplifies a relationship between the itinerary 301 and the spot information 401. As illustrated in FIG. 5, at least one piece of spot information 401 may be registered for the itinerary 301, and when a plurality of pieces of spot information 401 are registered, the order of touring around the spot information 401 is also registered. FIG. 5 exemplifies three itineraries 301 (itineraries 1 through 3), and one piece of spot information 401 may be registered for a plurality of itineraries 301. As illustrated as the itineraries 2 and 3 for example, there may be itineraries 301 that include the same piece of spot information 401. When for example there are itineraries 301 that include the same piece of spot information 401 but the order of touring around the spot information 401 is different or different users generated such itineraries 301, these itineraries are treated as different itineraries 301. This is because for example an order of the spots included in the itinerary 301 is desirable for some users to tour around those spots in an easy order. Meanwhile, for users who wish to tour around spots that appeared in a movie or an animation drama in the order in which those spots appeared in the movie or drama, it is more important to do this rather than to tour around those spots in an easy order. In another example, some users wish to just visit a certain spot or other users wish to visit that spot in a particular period of time such as when they can see the sunset or they can enjoy a night view. Further, even itineraries of touring the same spots such as an itinerary of touring around haunted spots or an itinerary of touring around cut-out face signs for taking pictures with faces fit into them may sometimes be based on different purposes for visiting the spots. Thus, in some embodiments, a generated itinerary is treated as a different itinerary from other itineraries even when for example they are itineraries in which the customers tour around the same spots in the same order.

Next, explanations will be given for a setting control process of information representing a visited state in the embodiment. First, explanations will be given for information that is used in a setting control process. As described above, the storage unit 210 of the server 100 may store for example a setting control program, the itinerary master 600, the spot master 700, the association information 800, visited-state information 900, which will be described later, etc.

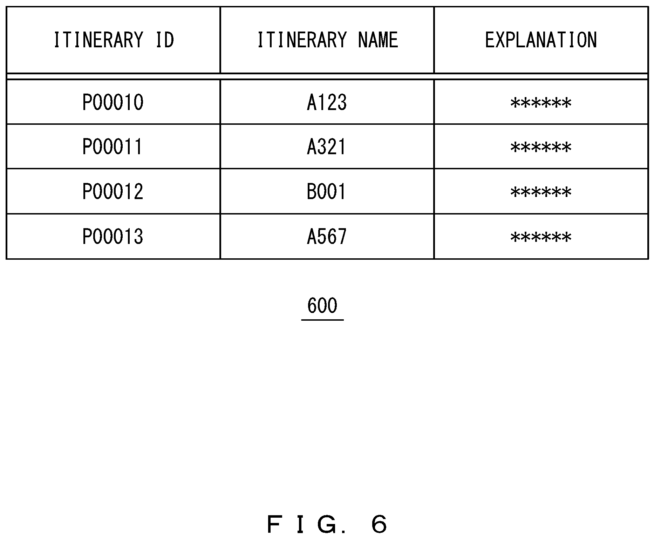

FIG. 6 exemplifies the itinerary master 600. In the itinerary master 600, entries corresponding to for example itineraries 301 registered by users and the provider of the itinerary assistance service are registered. An entry includes for example an itinerary ID (identifier), an itinerary name and an explanation. An itinerary ID is for example information for identifying the itinerary 301 that corresponds to an entry registered in the itinerary master 600. An itinerary name is for example the name of the itinerary 301 that corresponds to an entry. An explanation is for example an explanation for the itinerary 301 that corresponds to an entry. In an explanation, for example the purpose of touring around the spots included in the itinerary or merits of the itinerary may be registered.

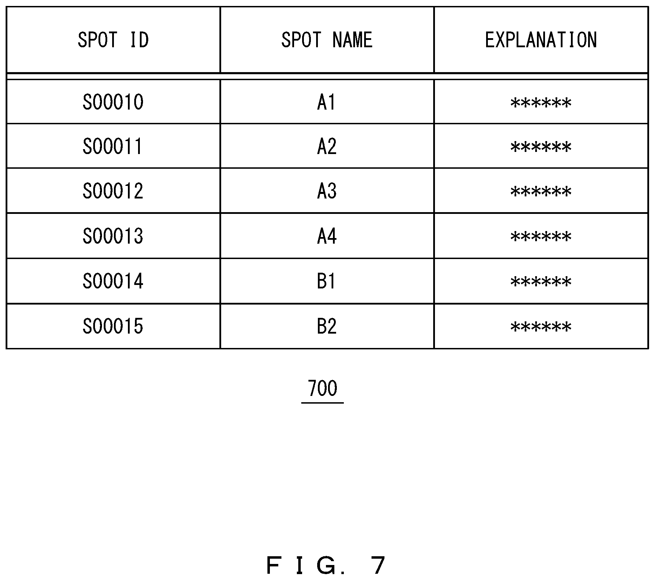

FIG. 7 exemplifies the spot master 700. The spot master 700 registers for example an entry related to the spot information 401 that was registered by the user or the provider of the itinerary assistance service. An entry includes for example a spot ID, a spot name and an explanation. A spot ID is for example information for identifying the spot information 401 corresponding to an entry registered in the spot master 700. A spot name is for example the name of the spot information 401 that corresponds to an entry. An explanation is for example an explanation for the spot information 401 that corresponds to an entry. As an explanation, for example the purpose of visiting the spot information 401 that corresponds to an entry or merits of the spot information 401 may be registered.

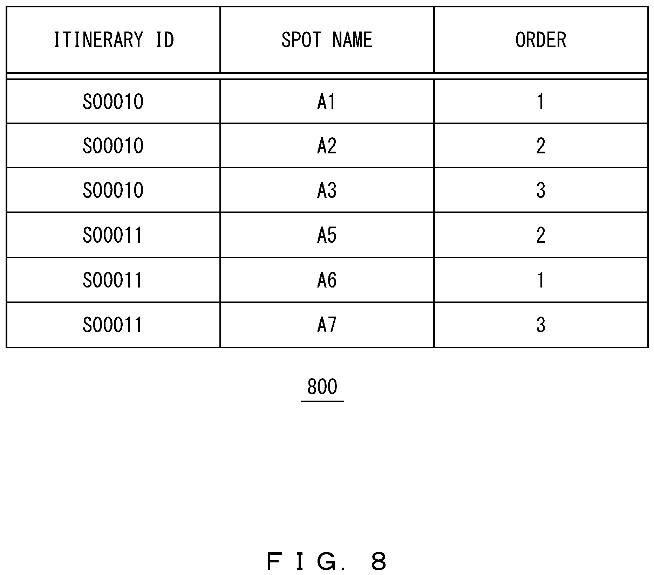

FIG. 8 exemplifies the association information 800. In the association information 800, an entry for associating the itinerary 301 and spot information 401 included in the itinerary 301 is registered. An entry includes for example an itinerary ID, a spot ID for identifying the spot information 401 and an order of touring around spots of the spot information 401 that is identified by the spot IDs of the entry in an itinerary that is identified by an itinerary ID of the entry. Accordingly, referring to the association information 800 in addition to the itinerary master 600 and the spot master 700 makes it possible to obtain information of the itinerary, spots included in an itinerary and the order of touring around the spots.

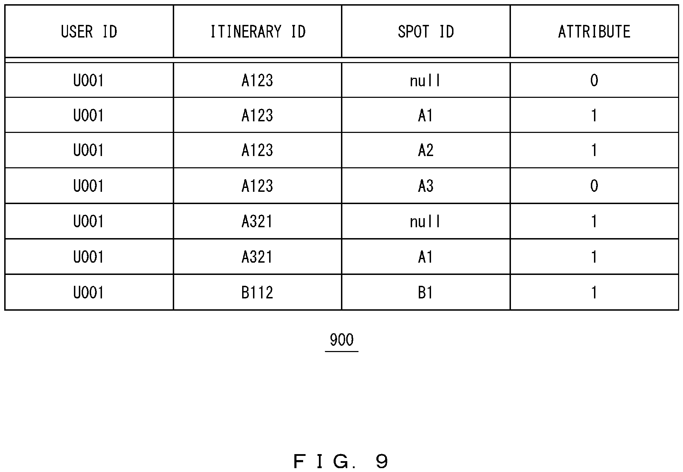

FIG. 9 exemplifies the visited-state information 900 according to the embodiments. The visited-state information 900 may be for example information that is generated for each user. In the visited-state information 900, an entry related to the itinerary 301 selected by the user is registered. An entry includes information of for example a user ID, an itinerary ID, a spot ID and an attribute. A user ID is identification information for identifying a user who corresponds to the visited-state information 900. An itinerary ID is information for identifying the itinerary 301. A spot ID is information for identifying the spot information 401. An attribute is an attribute representing whether or not the user identified by the user ID of the entry has visited the itinerary or the spot that corresponds to the entry. It is assumed in the example of FIG. 9 that an attribute of a value of 1 represents a visited state and an attribute of a value of 0 represents a not-visited state. Note that a value of 0, which represents a not-visited state, is registered as an attribute when an entry is registered in the visited-state information 900. When the user thereafter inputs an instruction of changing it to a visited state, a process that will be described later updates a value of 0, which represents a not-visited state, to a value of 1, which represents a visited state. Also, in the example of FIG. 9, the visited-state information 900 collectively manages information of visits of itineraries and information on whether or not spots have been visited, and when an entry corresponds to information of visits of an itinerary, "null" is registered as a spot ID. Also, when an entry corresponds to information on whether or not spots have been visited, information corresponding to a spot ID of the spot master 700 is registered as a spot ID. Note that a different embodiment may manage information of visits of itineraries and information on whether or not spots have been visited as different pieces of data.

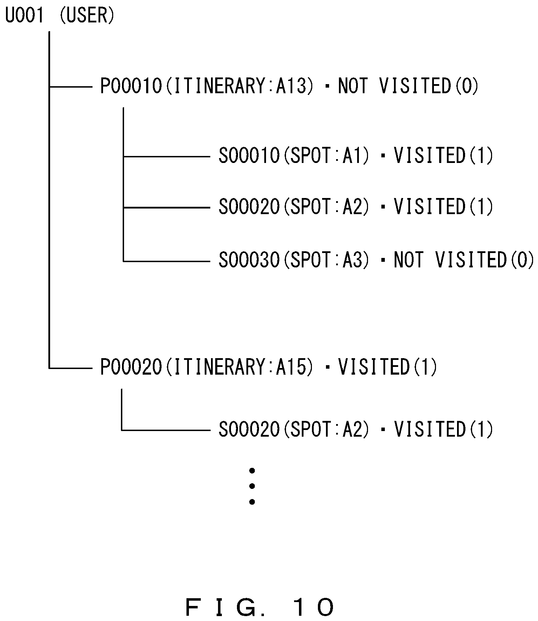

FIG. 10 exemplifies a relationship between the user, the itinerary 301, the spot information 401, and an attribute according to the embodiment. It is assumed in FIG. 10 that the user with the user ID U001 for example has selected the itineraries 301 with itinerary IDs P00010 and P00020 as the itineraries 301 that they themselves are interested in. In the example illustrated in FIG. 10, the itinerary with itinerary ID P00010 has not been visited, while the one with itinerary ID P00020 has been visited. Also, itinerary ID P00010 includes pieces of the spot information 401 with spot IDs S00010, S00020 and S00030, among which the pieces of spot information 401 with spot IDs S00010 and S00020 have been visited. Meanwhile, the spot information 401 identified by spot ID S00030 has not been visited. As described above, for example the visited-state information 900 defines a relationship between a user, the itinerary 301, the spot information 401, and an attribute.

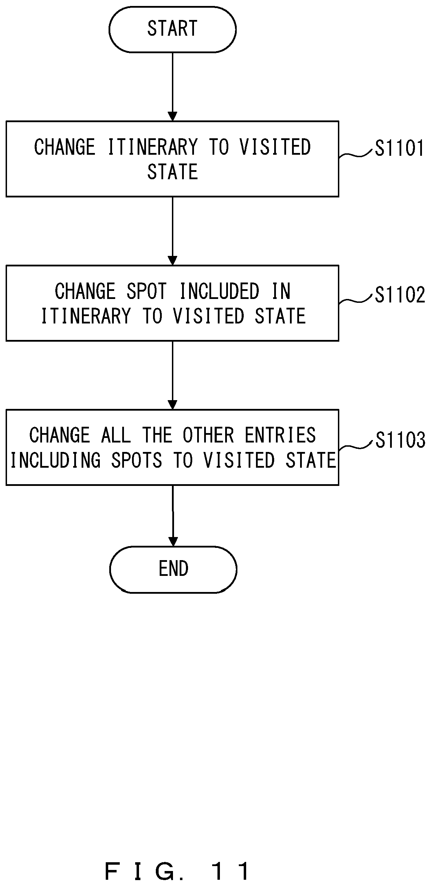

FIG. 11 exemplifies an operation flow of a setting control process of a visited state of the itinerary 301 according to the embodiment. The control unit 200 may start the operation flow illustrated in FIG. 11 when for example the user selects the itinerary 301 in the itinerary list window 300 so as to input an instruction of setting the attribute to a visited state to the server 100 via the terminal device 10 and the server 100 receives the instruction.

In S1101, the control unit 200 of the server 100 changes the attribute of the entry corresponding to the itinerary 301 that is specified by the received instruction to information representing a visited state (for example a value of 1) in the visited-state information 900 so as to update the setting of the attribute. Note that the entry corresponding to the itinerary 301 may be an entry that includes for example the itinerary ID corresponding to the itinerary 301 selected in the itinerary list window 300 and that has no designation in the spot ID (for example null) in Fig. 9.

Also, the control unit 200 in S1102 changes the attribute to the information representing a visited state (for example a value of 1) so as to update the setting of the attribute also for the entry corresponding to the spot information 401 included in the selected itinerary 301 in the visited-state information 900. For example, the control unit 200 sets the attributes of all the other entries including itinerary IDs that correspond to the selected itinerary 301 to a visited state.

In S1103, the control unit 200 sets, to a visited state, the attributes of all the other entries including the spot IDs of the entries that were changed to a visited state in S1102, so as to update the setting of the attributes, and the present flow is terminated.

As described above, according to the embodiment, when the attribute of the itinerary 301 is changed to information representing a visited state, the attributes of all the entries including the spot information 401 included in the itinerary 301 are changed to a visited state. This eliminates the necessity for the user to set information representing a visited state to the pieces of spot information 401 included in the itinerary 301 respectively. Thereby, information representing a visited state can be set easily.

Also, in a case when an itinerary 301 is set to a visited state and the attributes of all the pieces of spot information 401 included in that itinerary 301 are changed to a visited state, all the pieces of the spot information 401 included in a different itinerary 301 may sometimes be changed to a visited state. For example, in FIG. 5, when all the pieces of spot information 401 included in the itinerary 2 are set to a visited state, all the pieces of spot information 401 included in the itinerary 3 become a visited state. However, even when an itinerary 301 is set to a visited state and all the pieces of spot information included in a different itinerary 301 are set to a visited state the embodiment does not set the different itinerary 301 to a visited state. This is because even when itineraries include the same spots that are visited in the same order, it is desirable to treat them as separate itineraries as described above. This makes it possible to manage information on whether or not an itinerary is a visited state with a higher accuracy according to the embodiment.

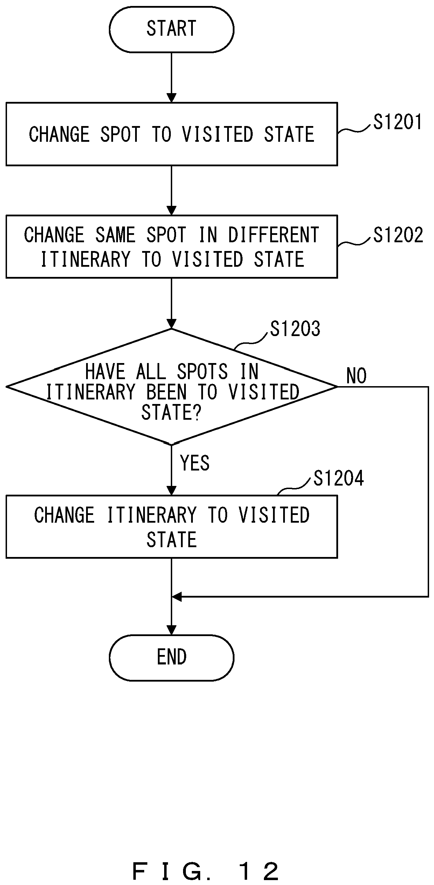

FIG. 12 exemplifies an operation flow of a setting control process of a visited state in the spot information 401 according to the embodiment. When for example the user inputs an instruction of setting a piece of spot information 401 to a visited state to the server 100 via the terminal device 10 in the spot list window 400 and the server 100 receives that input, the control unit 200 may start the operation flow illustrated in FIG. 12. Note that the spot list window 400 is for example a window displayed when the user selects the itinerary 301 in the itinerary list window 300, and is associated with the selected itinerary 301.

The control unit 200 of the server 100 in S1201 updates, to information representing a visited state, the attribute of the spot information 401 for which an instruction of setting to a visited state was input, and thereby updates the setting of the attribute. For example, the control unit 200 changes, to a visited state (for example a value of 1), the attribute of the entry of the visited-state information 900 including the itinerary ID of the itinerary 301 corresponding to the spot list window 400 to which the instruction was input and the spot ID of the spot information 401 specified in the instruction.

In S1202, the control unit 200 changes the attributes also of other entries including the spot ID of the spot information 401 for which an instruction was input to information representing a visited state so as to update the setting of the attribute in the visited-state information 900 as well.

In S1203, the control unit 200 determines whether or not the attributes of all the pieces of the spot information 401 included in the spot list window 400 that includes the spot information 401 for which instructions were input have been changed to a visited state. When the attributes of all the pieces of the spot information 401 have been changed to a visited state (YES in S1203), the flow proceeds to S1204. In S1204, the control unit 200 changes, to information representing a visited state in the visited-state information 900, the attribute of an entry of the itinerary 301 corresponding to the spot list window 400 in which the attributes of all the pieces of spot information 401 have become a visited state, and updates the setting of the attribute, and the present flow is terminated. For example, the control unit 200 changes, to information representing a visited state, the attribute of an entry that includes an itinerary ID of the itinerary 301 corresponding to the spot list window 400 and that has "null" as the spot ID. Meanwhile, when attributes of not all the pieces of the spot information 401 have been changed to a visited state (NO in S1203), the present flow is terminated.

It is assumed as described above that the control unit 200 changed the attribute of the spot information 401 to information representing a visited state in the spot list window 400. In such a case, when all the pieces of the spot information 401 in the spot list window 400 have become a visited state, the control unit 200 changes the itinerary 301 corresponding to the spot list window 400 to a visited state. As described above, when the attributes of all the pieces of the spot information 401 displayed by activating an itinerary 301 are set to a visited state, the attributes of that itinerary 301 are set to a visited state automatically. This can eliminate the necessity for the user to change both the spot information 401 and the itinerary 301 to a visited state.

Meanwhile, when the attribute of a piece of the spot information 401 included in an itinerary 301 is changed to a visited state, the attributes of all the pieces of the spot information 401 included in a different itinerary 301 sometimes become a visited state. It is assumed for example in FIG. 5 that the spot information 5 and spot information 6 have already become a visited state. In such a case, when the user sets spot 3 to a visited state in the itinerary 2, the pieces of the spot information 401 of all the spots included in the itinerary 2 as the setting target become a visited state, and thus the control unit 200 sets the itinerary 2 to a visited state. Also, at the same time, all the pieces of the spot information 401 included in the itinerary 3 become a visited state. However, even when a piece of spot information of an itinerary 301 is set to a visited state and all the pieces of spot information included in a different itinerary 301 become a visited state, the embodiment does not set that different itinerary 301 to a visited state. This is because there is a situation where for example it is desirable that different itineraries be treated as separate itineraries even when they are of touring around the same spots in the same order as described above. Therefore, the embodiment can improve the accuracy of managing information on whether or not an itinerary has been visited.

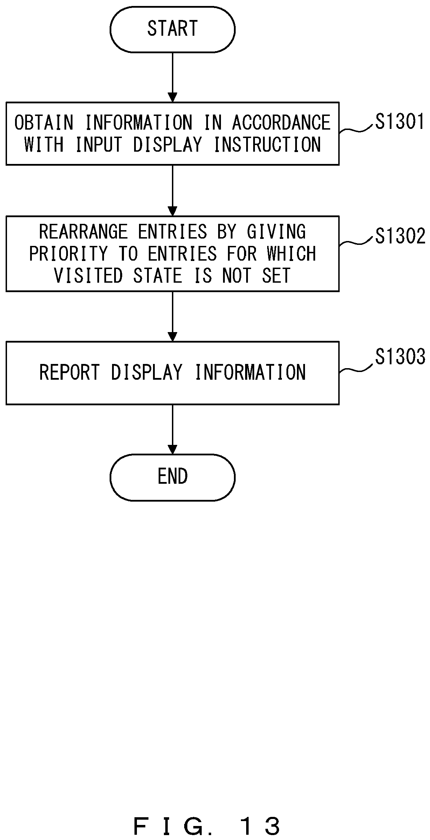

FIG. 13 exemplifies an operation flow of a display process of the itinerary list window 300 or the spot list window 400 according to the embodiment. The control unit 200 may start the operation flow illustrated in FIG. 13 when for example it receives, from the terminal device 10, a report of an instruction to display the itinerary list window 300 or the spot list window 400 input in the terminal device 10.

In S1301, the control unit 200 obtains information in accordance with the input display instruction. For example, when an instruction to display the itinerary list window 300 has been input, the control unit 200 reads information of an entry having a spot ID of "null" from the visited-state information 900. When an instruction to display the spot list window 400 has been input, the control unit 200 reads information of an entry having a spot ID of not "null" from the visited-state information 900.

In S1302, the control unit 200 refers to the attributes in the information of the read entries, and rearranges the entries in such a manner that entries in which information representing a not-visited state (for example a value of 0) is set are given a higher priority than entries in which information representing a visited state (for example a value of 1) are given. When for example an instruction to display the itinerary list window 300 has been input, the control unit 200 refers to the attribute of an entry, read from the visited-state information 900, that has a spot ID of "null". Then, the control unit 200 rearranges the entries in such a manner that entries having a value of 1, which corresponds to a visited state, are arranged at higher positions than those having a value of 0, which corresponds to a not-visited state. Similarly, when for example an instruction to display the spot list window 400 has been input, the control unit 200 refers to the attribute of an entry, read from the visited-state information 900, that has a spot ID of not "null". Then, the control unit 200 rearranges the entries in such a manner that entries having a value of 1, which corresponds to a visited state, are arranged at higher positions than those having a value of 0, which corresponds to a not-visited state. The arranging of entries having a value of 1 at higher positions is a setting of display in the display screen of the terminal device 10 so that such entries are more noticeable for the user, and in an example, such entries may be arranged at higher tiers.

In S1303, the control unit 200 generates display information for displaying read entries in the order obtained through the rearranging, and reports the information to the terminal device 10. When for example an instruction to display the itinerary list window 300 has been input, the control unit 200 outputs, to the terminal device 10, display information for arranging and displaying entries that have a spot ID of "null" and an attribute of a value of 0 at higher positions, the entries having been read from the visited-state information 900. Note that FIG. 3 exemplifies the display window of the terminal device 10 that is displayed in the above case, where not visited itineraries 301 are displayed at higher tiers than those for visited itineraries 301 so that they are noticeable to the user. Also, when for example an instruction to display the spot list window 400 has been input, display information is output to the terminal device 10 for arranging and displaying entries that have a spot ID of not "null" and an attribute of a value of 0 at higher positions, the entries having been read from the visited-state information 900. Note that FIG. 4 exemplifies the display window of the terminal device 10 that is displayed in the above case, where not-visited pieces of spot information 401 are displayed at higher tiers than those for visited state pieces of spot information 401 so that they are easily noticeable to the user. When display information is output as described above, the present operation flow is terminated.

As described above, the control unit 200 according to the embodiment gives a higher priority to an entry having a not-visited attribute so as to display it at a higher position when the control unit 200 outputs display information for displaying the itinerary list window 300, the spot list window 400, etc. in the display window of the terminal device 10. This makes it easy for the user to check the itinerary 301 or the spot information 401 that they have not experienced or visited before, when the itinerary list window 300 or the spot list window 400 is displayed in a display window of the terminal device 10. Also, by displaying information in the above manner, the embodiment can more reliably give priority to information that is useful to the user so as to display the information to the user.

While the above description exemplifies information such as the itinerary master 600, the spot master 700, the association information 800, the visited-state information 900, etc. in a format of tables, the embodiments is not limited to these examples. For example, the above information may be stored in the storage unit 210 in a different format such as a relational database, KVS (Key-Value store), etc., when it is possible to associate information that is associated by entries of these types of information. Also, in Fig. 9, the above embodiment exemplifies a case where the itinerary ID of an itinerary and the spot ID of spot information are managed in combination and an attribute representing whether or not the combination has already been visited is added to the combination. However, the embodiments is not limited to this. For example, a different embodiment may manage an attribute representing whether or not an itinerary has been visited and an attribute representing whether or not a spot has been visited in an independent manner.

Also, the operation flows illustrated in FIG. 11 and FIG. 12 in the above embodiment are respectively examples of a setting control method for information that represents a visited state according to the embodiment.

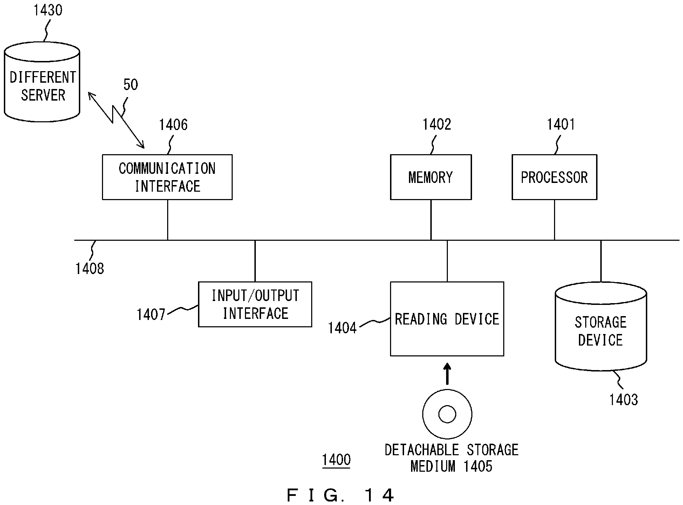

FIG. 14 exemplifies a hardware configuration of a computer 1400 for implementing the server 100 according to the embodiment. The hardware configuration of the computer 1400 illustrated in FIG. 14 includes for example a processor 1401, a memory 1402, a storage device 1403, a reading device 1404, a communication interface 1406 and an input/output interface 1407. The processor 1401, the memory 1402, the storage device 1403, the reading device 1404, the communication interface 1406, and the input/output interface 1407 are connected to each other via for example a bus 1408.

The processor 1401 uses the memory 1402 to execute for example a setting control program that describes the procedures of the above operation flows, and thereby provides some or all of the functions of the above control unit 200. Also, the storage unit 210 includes for example the memory 1402, the storage device 1403 and a detachable storage medium 1405. The storage device 1403 such as the server 100 stores information such as the itinerary master 600, the spot master 700, the association information 800, the visited-state information 900, etc.

The memory 1402 is for example a semiconductor memory, and may include a RAM region and a ROM region. The storage device 1403 is for example a hard disk, a semiconductor memory such as a flash memory etc., or an external storage device. RAM is an abbreviation for Random Access Memory. ROM is an abbreviation for Read Only Memory.

The reading device 1404 accesses the detachable storage medium 1405 in accordance with an instruction from the processor 1401. The detachable storage medium 1405 is implemented by for example a semiconductor device (such as a USB memory etc.), a medium to and from which information is input and read through magnetic effects (such as a magnetic disk etc.), a medium to and from which information is input and output through optical effects (such as a CD-ROM, a DVD, etc.), or other devices. Note that USB is an abbreviation for Universal Serial Bus. CD is an abbreviation for Compact Disk. DVD is an abbreviation for Digital Versatile Disk.

The communication interface 1406 transmits and receives data via a network 50 in accordance with an instruction from the processor 1401. The communication unit 220 is for example the communication interface 1406. The computer 1400 is connected to the terminal device 10 via for example the communication interface 1406. The input/output interface 1407 may be an interface for the input device and the output device, for example. The input device is for example a device such as a keyboard, a mouse, etc., which receive an instruction from the user. The output device is for example a display device such as a display etc. or an audio device such as a speaker device etc.

Respective programs according to the embodiments are provided to the server 100 in a form for example in which:
(1) They are installed in the storage device 1403 in advance
(2) They are provided through the detachable storage medium 1405
(3) They are provided by a different server 1430 such as a program server

Note that the hardware configuration of the computer 1400 for implementing the server 100 described by referring to FIG. 14 is exemplary, and the embodiments is not limited to this example. For example, some or all of the functions of the above control unit 200 may be implemented as hardware by using an FPGA, SoC, etc. Note that FPGA is an abbreviation for Field Programmable Gate Array. SoC is an abbreviation for System-on-a-chip.

Some embodiments have been explained above. However, it is to be understood that the scope of the embodiments is not limited to the above but includes various types of variations and alternatives of the above embodiments. For example, it is to be understood that the respective embodiments can be embodied by modifying constituents without departing from the spirit or the scope of the embodiments. It is to be understood also that various embodiments can be achieved by appropriately combining the plurality of constituents disclosed in the above embodiments. It is further to be understood by those skilled in the art that various embodiments can be achieved by deleting or replacing some or all the constituents described in the embodiments or by adding some constituents to constituents described in the embodiments.

The above embodiments can suppress complexity accompanying the setting of information representing a visited state for an itinerary or a spot.

## Claims

1. A setting control program for causing a computer (1400) to execute a process, the process comprising:
setting, when receiving a change instruction to change an attribute of a first itinerary (301) including at least one piece of spot information (401) to a visited state, the attribute of the first itinerary to a visited state and executing an update process of updating setting so that an attribute of each piece of spot information included in the first itinerary becomes a visited state; and
refraining from setting an attribute of a second itinerary to a visited state even when attributes of all pieces of spot information included in the second itinerary have become a visited state in response to the update process for the second itinerary whose attribute is a not-visited state.

2. A setting control program for causing a computer (1400) to execute a process, the process comprising:
setting, when receiving an instruction to change an attribute of particular spot information (401) included in a first itinerary (301) to a visited state, the attribute of the particular spot information to a visited state;
setting the attribute of the first itinerary to a visited state when attributes of all pieces of spot information included in the first itinerary have become a visited state in response to setting of the attribute of the particular spot information to a visited state; and
refraining from setting the attribute of the second itinerary to a visited state even when the attributes of all pieces of spot information included in the second itinerary including the particular spot information have become a visited state in response to setting of the attribute of the particular spot information to a visited state.

3. The setting control program according to claim 1, wherein the process further includes
preferentially displaying an itinerary whose attribute is not set to a visited state from among a plurality of itineraries than an itinerary whose attribute is set to a visited state from among the plurality of itineraries when an instruction to display a list of a plurality of itineraries including the first itinerary and the second itinerary is received.

4. The setting control program according to claim 1, wherein the process further includes
preferentially displaying spot information whose attribute is not set to a visited state from among a plurality of pieces of spot information than spot information whose attribute is set to a visited state from among the plurality of pieces of spot information when an instruction to display a list of a plurality of pieces of spot information is received.

5. A setting control method for causing a computer (1400) to execute a process, the process comprising:
setting, when receiving a change instruction to change an attribute of a first itinerary (31) including at least one piece of spot information (401) to a visited state, the attribute of the first itinerary to a visited state and executing an update process of updating setting so that an attribute of each piece of spot information included in the first itinerary becomes a visited state; and
refraining from setting an attribute of a second itinerary to a visited state even when attributes of all pieces of spot information included in the second itinerary have become a visited state in response to the update process for the second itinerary whose attribute is a not-visited state.

6. A setting control device (100) comprising:
a control unit (200) configured to:
set, when receiving a change instruction to change an attribute of a first itinerary (301) including at least one piece of spot information (401) to a visited state, the attribute of the first itinerary to a visited state and execute an update process of updating setting so that an attribute of each piece of spot information included in the first itinerary becomes a visited state, and
refrain from setting an attribute of a second itinerary to a visited state even when attributes of all pieces of spot information included in the second itinerary have become a visited state in response to the update process for the second itinerary whose attribute is a not-visited state.
